# EUROPEAN PATENT APPLICATION

(11) **EP 2 924 942 A2**
(43) Date of publication of application: **30.09.2015**
(21) Application number: 13806097.5
(22) Date of filing: 15.08.2013
(51) Int. Cl.: H04L 29/06

(54) **METHOD, DEVICE AND SYSTEM FOR ACHIEVING MULTI-SERVICE SERVER DISTRIBUTION OF SESSION INITIATION PROTOCOL**

(30) Priority: 26.11.2012 CN 201210486788
(71) Applicant: ZTE Corporation, Shenzhen, Guangdong 518057 (CN)
(72) Inventor: CUI, Pisuo, Shenzhen Guangdong 518057 (CN); LU, Jianfeng, Shenzhen Guangdong 518057 (CN); QIN, Yantao, Shenzhen Guangdong 518057 (CN); CUI, Zhenfeng, Shenzhen Guangdong 518057 (CN)
(74) Representative: Gervasi, Gemma
(86) International application number: PCT/CN2013/081575
(87) International publication number: WO 2013/189338

(57) **Abstract**

A method, apparatus and system for achieving the multi-service server distribution of session initiation protocol are provided. The method includes: obtaining and analyzing a SIP service request message sent by an SIP client; querying a database according to an analysis result of the SIP service request message, so as to obtain template information of a corresponding user and message forwarding method information corresponding to a message method; and obtaining forwarding address information of a target service server according to the template information of the user and the message forwarding method information, and sending the SIP service request message to a corresponding target service server according to the forwarding address information. The embodiments of the present invention can be applied to complete the distribution of an SIP service request message through the apparatus for achieving the multi-service server distribution of session initiation protocol which is provided in the present application, thereby simplifying an interface between a client and a server and improving the using effect of the user.

## Description

### Technical Field

The present invention relates to the communication technology field, and in particular, to a method, apparatus and system for achieving multi-service server distribution of session initiation protocol.

### Background of the Related Art

The Session Initiation Protocol (SIP) is one application-layer control protocol based on Internet Protocol (IP) and defined by the IETF. Because the SIP is a signaling protocol based on the plain text, it can manage the sessions in various access networks.

An important feature of the SIP is that it does not define the type of the session to be established, while only defines how to manage the session. Because the SIP has the flexibility, it means that the SIP can be used for many applications and services, including the interactive games, music and video on demand, voice, video and Web meeting, etc.

Based on that the SIP has many advantages, such as, simple, easy to implement, flexible, easy to expand, etc., more and more operators, Competitive Local Exchange Carriers (CLEC) and Internet Telephony Service Provider (ITSP) are providing the SIP-based services, such as, the local call and long distance telephony, the online information and instant messaging, the IP Centrex / Hosted PBX, the voice short message, the push-to-talk (PTT), the multimedia conference, etc.

The SIP Application Server (SIP AS) is a service entity based on the SIP protocol, used to implement various services based on the SIP protocol, for example, the services, such as, calling, conferencing, video, etc. Currently, the number of users is becoming larger and larger, and it is more and more difficult to implement the multi-service in the single SIP Application Server, therefore, more and more service providers adopt the multi-service cluster solution.

The SIP client is the client device supporting the SIP application, such as, the soft terminal developed on the Personal Computer (PC) machine, the SIP cell phone, the client software developed on the cell phone or the Personal Digital Assistant (PDA), etc.

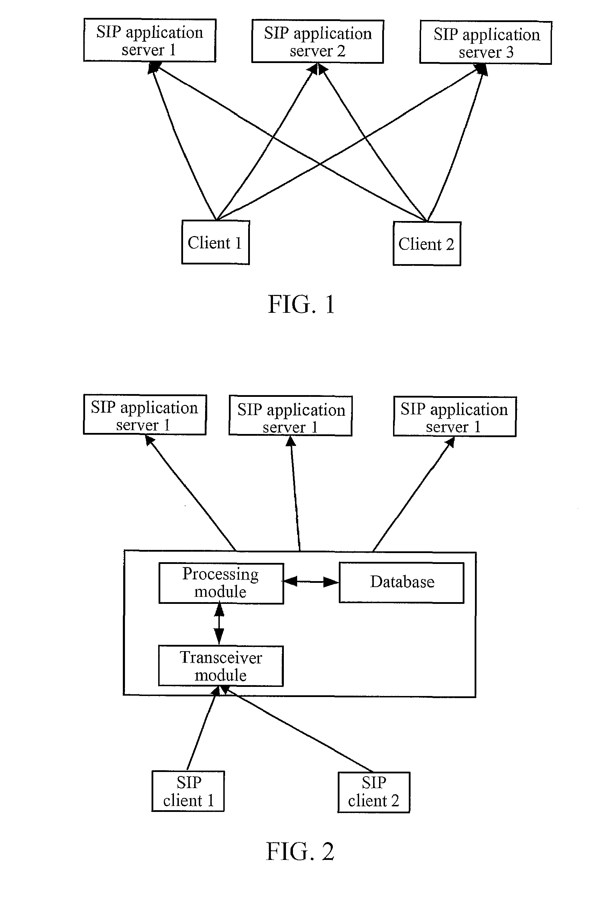

If one SIP client wants to use multiple services and the multiple services are in the cluster deployment, as shown in FIG. 1, the related art usually requires the SIP client to simultaneously connect to each SIP application server; it is noted that the present text paper will not consider each passed SIP network element between the client and the SIP application server, and in practical application, there are the following problems by using the solution.

### 1), it is difficult to control the permission of the user.

Because it is required to judge the permission of the user in each SIP application server when the SIP client initiates a service, and it will undoubtedly increase the difficulty of controlling the permission of the user.

### 2), it is complex to configure the SIP client.

In actual implementation, the address information of each SIP application server is required to be configured at the SIP client, and, when the service cluster information changes, for example, when the changes, such as, adding, deleting, modifying the information, etc., are generated, it is difficult to synchronize the information changing situation of the service cluster to the SIP client.

### 3), it is complex to implement the multi-service nesting function.

For example, to nest the Private Branch Exchange (PBX) or conference service, etc., in the calling service initiated by the SIP client, and its implementation procedure is very complex and cumbersome.

### Summary of the Invention

The embodiment of the present invention provides a method, apparatus and system for achieving multi-service server distribution of session initiation protocol, for solving.

In order to solve the above-mentioned problem, the embodiment of the present invention is realized by adopting the following technical solutions.

A method for achieving multi-service server distribution of session initiation protocol (SIP) comprises:
obtaining and analyzing a SIP service request message sent by an SIP client;
querying a database according to an analysis result of the SIP service request message, so as to obtain template information of a corresponding user and message forwarding method information corresponding to a message method; and
obtaining forwarding address information of a target service server according to the template information of the user and the message forwarding method information, and sending the SIP service request message to a corresponding target service server according to the forwarding address information.

Alternatively, the analysis result comprises: sender and receiver information of the SIP service request message, message method information and message type information.

Alternatively, the step of querying a database according to an analysis result of the SIP service request message to obtain template information of a corresponding user and message forwarding method information corresponding to a message method comprises:
querying a database according to the sender information of the SIP service request message in the analysis result to judge whether the user opens an account, and if the user is not found in the database, then procedure ending; if the user is found in the database, then obtaining the template information of the user and the message forwarding method information corresponding to the message method from the database, wherein the database records account information of the user, the template information of the user, the message forwarding method information corresponding to the message method, address information of the service server, and address information of a soft exchange or a core network.

Alternatively, before implementing the step of querying a database according to an analysis result of the SIP service request message to obtain template information of a corresponding user and message forwarding method information corresponding to a message method, further comprising:
receiving authentication information request sent by the user; and
performing an authentication on the user information, and executing a next step after the user is authenticated successfully; and if the authentication fails, the procedure ending.

Alternatively, the information in the database can be stored in a memory, wherein the memory comprises:
a template information hash table, used for storing service type information corresponding to the template;
a service server hash table, used for storing the forwarding address information of the service server; and
an SIP method distribution hash table, used for storing distribution rules of various SIP methods.

Alternatively, the memory further comprises:
a soft exchange distribution hash table, used for storing a corresponding distribution method and forwarding address information of a soft exchange;
and/or, a core network distribution hash table, used for storing a corresponding distribution method and forwarding address information of the core network.

An apparatus for achieving multi-service server distribution of session initiation protocol (SIP) comprises:
a receiving and sending module, configured to: obtain and analyze a SIP service request message sent by a SIP client and send an analysis result to a processing module; and send the SIP service request message to a corresponding target service server according to the obtained forwarding address information;
the processing module, configured to: query a database according to an analysis result of the SIP service request message, so as to obtain template information of a corresponding user and message forwarding method information corresponding to a message method; and obtain forwarding address information of the target service server according to the template information of the user and the message forwarding method information, and send the forwarding address information of the target service server to a transceiver module; and
a database, configured to: store the template information of the user and the message forwarding method information corresponding to a message method.

Alternatively, the analysis result comprises: sender and receiver information of the SIP service request message, message method information and message type information.

Alternatively, the processing module queries the database according to the sender information of the SIP service request message in the analysis result to judge whether the user opens an account, and if the user is found in the database, and then obtains the template information of the user and the message forwarding method information corresponding to the message method from the database, wherein the database records account information of the user, the template information of the user, the message forwarding method information corresponding to the message method, address information of the service server, and address information of a soft exchange or a core network, etc.

Alternatively, the apparatus for achieving multi-service server distribution of session initiation protocol further comprises:
an authentication module, configured to: search for the user information when the processing module receives the authentication information request sent by the user, and perform authentication on authentication reply information replied by the user; and control the processing module to send the obtained forwarding address information of the target service server to the transceiver module only when the authentication module determines that the user authentication is passed.

Alternatively, related information in the database can be stored in a memory, wherein the memory stores:
a template information hash table, used for storing service type information corresponding to the template;
a service server hash table, used for storing the forwarding address information of the service server; and
an SIP method distribution hash table, used for storing distribution rules of various SIP methods.

Alternatively, the memory further stores:
a soft exchange distribution hash table, used for storing a corresponding distribution method and forwarding address information of a soft exchange;
and/or, a core network distribution hash table, used for storing a corresponding distribution method and forwarding address information of the core network.

A system for achieving multi-service server distribution of session initiation protocol (SIP) comprises a SIP client and a service server, and further comprises the above-mentioned apparatus for achieving multi-service server distribution of session initiation protocol. The apparatus includes:
a transceiver module, configured to: obtain and analyze a SIP service request message sent by a SIP client and send an analysis result to a processing module; and send the SIP service request message to a corresponding target service server according to the obtained forwarding address information;
the processing module, configured to: query a database according to an analysis result of the SIP service request message, so as to obtain template information of a corresponding user and message forwarding method information corresponding to a message method; and obtain forwarding address information of the target service server according to the template information of the user and the message forwarding method information, and send the forwarding address information of the target service server to the transceiver module; and
a database, configured to: store the template information of the user and the message forwarding method information corresponding to a message method.

The present application can be applied to complete the distribution of a SIP service request message through the apparatus for achieving the multi-service server distribution of session initiation protocol which is provided in the embodiment of the present invention, thereby simplifying an interface between a client and a server and improving the using effect of the user.

### Brief Description of Drawings

FIG. 1 is a structure diagram of network of a user achieving simultaneously accessing multiple service servers in the related art;
FIG. 2 is a structure diagram of an apparatus for achieving multi-service server distribution of session initiation protocol provided by an embodiment of the present invention;
FIG. 3 is a flow chart of signaling interaction of a multi-service distribution method provided by an embodiment of the present invention;
FIG. 4 is a structure diagram of a system for achieving multi-service server distribution of session initiation protocol provided by an embodiment of the present invention.

### Preferred Embodiments of the Present Invention

The embodiment of the present invention is described in detail with reference to the accompanying drawings hereinafter. It should be illustrated that, in the case of not conflicting, the embodiments in the present application and features in these embodiments can be combined with each other.

A method for achieving multi-service server distribution of session initiation protocol (SIP) provided by the embodiment of the present invention includes the following specific steps.

In S 10, a SIP service request message sent by a SIP client is obtained and analyzed.

In S20, a database is queried according to an analysis result of the SIP service request message, so as to obtain template information of a corresponding user and message forwarding method information corresponding to a message method.

The analysis result includes: sender and receiver information, message method information and message type information of the SIP service request message.

In S30, forwarding address information of a target service server is obtained according to the template information of the user and the message forwarding method information, and the SIP service request message is sent to a corresponding target service server according to the forwarding address information.

Specifically, in step S20, the step of querying a database according to an analysis result of the SIP service request message to obtain template information of a corresponding user and message forwarding method information corresponding to a message method includes the following step.

In S201, a database is queried according to the sender information of the SIP service request message in the analysis result to judge whether the user opens an account, and if the user is not found in the database, then the procedure ends; or else, the template information of the user and the message forwarding method information corresponding to the message method are obtained from the database, wherein the database records account information of the user, the template information of the user, and the message forwarding method information corresponding to the message method.

Alternatively, after executing the step S201, the method further includes the following step.

In S202, the authentication information of the user is judged, and a next step is executed after the authentication is successfully; if the authentication fails, then the procedure ends.

Alternatively, before executing the step S201, the method further includes the following step.

In S203, authentication information request sent by the user is received, and the user information is authenticated. In another embodiment, the information of the database can be stored in a memory, wherein the memory includes:
a template information hash table, used for storing service type information corresponding to the template;
a service server hash table, used for storing the forwarding address information of the service server; and
an SIP method distribution hash table, used for storing distribution rules of various SIP methods.

Further alternatively, the memory further includes:
a soft exchange distribution hash table, used for storing a corresponding distribution method and forwarding address information of a soft exchange;
and/or, a core network distribution hash table, used for storing a corresponding distribution method and forwarding address information of the core network.

Specifically, the method for achieving the multi-service server distribution of session initiation protocol includes the following steps.

In steps 1, an apparatus for achieving multi-service server distribution of session initiation protocol corresponding to the method includes a SIP protocol stack for receiving and forwarding the SIP service request message and includes one service distribution layer, wherein the service distribution layer can determine the target forwarding address of the SIP service request message, and further includes one database (an external database or a memory database), used for storing the account information of the user, the template information of the user and the message forwarding method corresponding to the message method and so on.

In step 2, when the SIP protocol stack receives the SIP service request message sent by the SIP client, it analyzes the obtained data packets, to obtain the necessary field, such as, the sender and receiver information, message method information, message type information of the SIP service request message, etc.

In step 3, the service distribution layer queries the database according to the information obtained in step 2 to judge whether the user opens an account; if the user does not open an account, then the procedure ends; if the user has already opened an account, then the template information of the user and the message forwarding method corresponding to the method message, etc., are obtained.

In step 4, the service distribution layer determines the corresponding target service server according to the template information of the user, the message type and the corresponding message forwarding method, and then obtains the forwarding address information of the target service server.

In that step, the service distribution layer finds various services opened by the template in the template hash table according to the template of user, and then finds which type of service the message should be forwarded to, according to the message method and the message type, in the SIP method distribution hash table; if the service belongs to the services opened under the template, then the forwarding address information of the service server is found via the service server hash table.

In that step, the target service server is a SIP application server, and also can configure the forwarding address as the service server of the non-SIP application server, such as, forwarding to the soft exchange, the core network, etc.

In step 5, the SIP service request message is sent to the corresponding target service server according to the forwarding address information of the target service server.

Specifically, before executing all steps, it further includes a step of presetting the information, such as, the user template information, the message forwarding method, the address of the service server, and the address of the soft exchange or the core network, etc., in the database.

Specifically, before executing all steps, it further includes pre-storing, in the memory of the service distribution layer, one template information hash table, used for storing the service type corresponding to the template; and storing one service server hash table, used for storing the address information of the service; and storing one SIP method distribution hash table, used for storing distribution rules of various SIP methods; and storing a soft exchange and/or core network distribution hash table, respectively used for storing a corresponding distribution method and target address, etc. In specific implementation process, the distribution method in the step 4 can be achieved by the above-mentioned hash table.

Specifically, before executing all the steps, it further includes the step of pre-storing the account information of the user and the template information of the user in the database.

Specifically, before executing the step 4, it further includes a step of the user authentication, that is, the processing of the subsequent SIP service request message must be performed after the user authentication is successful; if the authentication fails, and then the procedure is directly ended.

Specifically, before the execution of all steps, it further includes the following steps:
a), adding or modifying the template of user in the database through a certain operation method;
b), adding or modifying the distribution rules of the SIP method in the database through a certain operation method;
c), adding or modifying the service information corresponding to the template in the database through a certain operation method;
d), adding or modifying the priority of the service server in the database through a certain operation method; and
e), adding or modifying the forwarding rules of the soft exchange or the core network in the database through a certain operation method.

All the operation methods can be realized by the related art, and the present text will not go into detail.

Specifically, in the implementation process of the present invention, the service distribution layer will judge whether there is an update for the template information in the database, etc.; if there is the update, then the updated template information in the database will be synchronized to the memory hash table, and it is forwarded by using the newest forwarding rules when forwarding the message.

For example, when the relevant information of the template information in the database is deleted, such as, deleting a certain forwarding rule, the updated data after deleting the forwarding rule is synchronized to the memory hash table at that moment.

As shown in FIG. 2, an apparatus for achieving multi-service server distribution of session initiation protocol (SIP) provided by the embodiment of the present invention includes:
a transceiver module, configured to: obtain and analyze a SIP service request message sent by an SIP client and send an analysis result to a processing module; and send the SIP service request message to a corresponding target service server according to the obtained forwarding address information;
the processing module, configured to: query a database according to the analysis result of the SIP service request message, so as to obtain template information of a corresponding user and message forwarding method information corresponding to a message method; and obtain forwarding address information of the target service server according to the template information of the user and the message forwarding method information, and send the forwarding address information of the target service server to the transceiver module; and
a database, configured to: store the template information of the user and the message forwarding method information corresponding to a message method.

The analysis result includes: sender and receiver information, message method information and message type information of the SIP service request message.

Specifically, the processing module queries the database according to the sender information of the SIP service request message in the analysis result to judge whether the user opens an account, and if the user is found in the database (that is, it is judged that the user has already opened an account), then obtains the template information of the user and the message forwarding method information corresponding to the message method from the database, wherein the database records account information of the user, the template information of the user, the message forwarding method information corresponding to the message method, address information of the service server, and address information of a soft exchange or a core network.

Alternatively, the apparatus for achieving multi-service server distribution of session initiation protocol further includes:
an authentication module, configured to: search for the user information when the processing module receives the authentication information request sent by the user, and perform authentication on authentication reply information replied by the user; and alternatively, control the service distribution layer to send the obtained forwarding address information of the target service server to the transceiver module only when the authentication module determines that the user authentication is passed.

Specifically, the information of the database can be stored in a memory, and the memory stores:
a template information hash table, used for storing service type information corresponding to the template;
a service server hash table, used for storing the forwarding address information of the service server; and
a SIP method distribution hash table, used for storing distribution rules of various SIP methods.

Alternatively, the memory further stores:
a soft exchange distribution hash table, used for storing a corresponding distribution method and forwarding address information of a soft exchange;
and/or, a core network distribution hash table, used for storing a corresponding distribution method and forwarding address information of the core network.

Continuing to refer to FIG. 2, it can be seen from FIG. 2, the logical entity included in the apparatus for achieving multi-service server distribution of session initiation protocol provided by the embodiment of the present invention includes a transceiver module, a processing module and a database.

The transceiver module receives and sends the SIP message of the user, and completes the analysis and encapsulation of the SIP message when receiving and sending the message.

The processing module is the most core part of achieving the distributing the SIP message to the multi-service server, and is configured to judge whether or not to forward and which application server's address the SIP message is forwarded to according to the attribute of the user, the request message and the related data of the database. In order to quickly locate the address of the request service, the memory stores one template information hash table for storing the service type corresponding to each template, and also can store one service server hash table for storing the address information of the service, and stores a SIP method distribution hash table used for storing the distribution rules of various SIP methods, and a soft exchange and/or core network distribution hash table, respectively storing the corresponding distribution method and target address, etc.

The database is configured to record the account information of the user and the SIP message distribution rule information. The database is required to have one user table for storing the basic information of the user and the template of user; and further required to have one template table for storing which services are opened under the template respectively and the priority of each service; and also required to have one distribution rule table for storing the distribution rules corresponding to each SIP method; and also required to store the service information table, the soft exchange and core network information table, wherein the soft exchange and core network information tables respectively store the address information of the service server and the address information of the soft exchange or the core network.

It is further explained by using the application example of the present invention hereinafter.

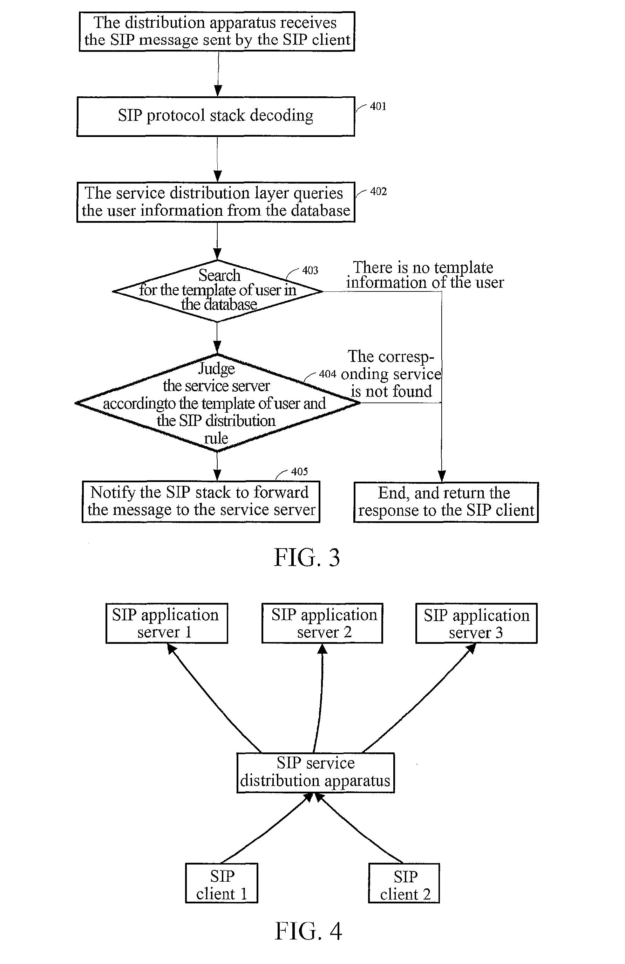

Continuing to refer to FIG. 3, it describes a flow chart of processing the SIP service request message distribution by the apparatus for achieving the multi-service server distribution of session initiation protocol in a specific application example of the present application. The figure describes the procedures that the apparatus receives the SIP service request message of the client, firstly the transceiver module performs decoding to obtain the information, such as, the sender, the receiver, the message type, the message method and the routing mode of the SIP service request message, etc., and then reports to the service distribution layer, and the service distribution layer obtains the template information of the user from the database and then obtains the address information of the service server according to the template information and the distribution rules, and notifies the transceiver module to forward the SIP service request message. The specific steps are as follows.

In step 401, the transceiver module receives the SIP service request message sent by the SIP client, and analyzes the SIP method (such as, INVITE or MESSAGE) contained in the SIP message from the message, analyzes the sender and receiver of the message (which is the From and To fields in the SIP message), and analyzes the type of message (adding the Accpet-Contact field in ITEF) and the routing mode of message (the Route field).

In step 402, the service distribution layer obtains the related information reported by the transceiver module and inquires the template information of the user from the database.

In step 403, the service distribution layer judges whether there is the user according to the database; if there is no user, then it is returned and ended; if there is a user, then the template information of the user is returned.

In step 404, after the service distribution layer obtains the user template information returned by the database, it queries which service it should be distributed to according to the SIP method in the message distribution rules hash table, and then queries whether there is the corresponding service under the template according to the template information; if it exists, the forwarding address information of the target service server is queried according to the service information hash table; and if not, then it is returned and ended.

In addition, the judgment further can be added in the step, to judge the next basic service type according to the source of the current message and the priority of the message, so as to achieve nesting the messages. It also can add the judgment mode to judge whether to send the message to the soft exchange or the core network.

In step 405, the transceiver module receives the forwarding address information of the target service server sent by the service distribution layer, and sends the received message to the target address.

FIG. 4 is a network structure diagram of a system for achieving multi-service server distribution of session initiation protocol provided by an embodiment of the present invention. It can be seen from FIG. 4 that, it can be realized, through the apparatus for achieving the multi-service server distribution of the session initiation protocol provided by the embodiment of the present invention (the SIP service distribution apparatus), that the SIP client only needs to connect to one target address and it can realize simultaneously accessing the multiple services, and the messages among various services and the message sent to the SIP client are all transferred through the apparatus.

Specifically, the embodiment of the present invention provides a system for achieving multi-service server distribution of session initiation protocol (SIP), including a SIP client and a service server, and further including the above-mentioned apparatus for achieving multi-service server distribution of session initiation protocol. Continuing to refer to FIG. 2, the apparatus includes:
a transceiver module, configured to: obtain and analyze a SIP service request message sent by a SIP client and send an analysis result to a service distribution layer; and send the SIP service request message to a corresponding target service server according to the obtained forwarding address information;
the service distribution layer, configured to: query a database according to the analysis result of the SIP service request message, so as to obtain template information of a corresponding user and message forwarding method information corresponding to a message method; and obtain forwarding address information of the target service server according to the template information of the user and the message forwarding method information, and send it to the transceiver module; and
a database, configured to: store the template information of the user and the message forwarding method information corresponding to a template.

The specific description to the SIP service distribution apparatus can refer to the above text, and it will not be repeated here.

### Industrial Applicability

The present application can be applied to complete the distribution of a SIP service request message through the apparatus for achieving the multi-service server distribution of session initiation protocol which is provided in the embodiment of the present invention, thereby simplifying an interface between a client and a server and improving the using effect of the user.

## Claims

1. A method for achieving multi-service server distribution of session initiation protocol (SIP), comprising:
obtaining and analyzing a SIP service request message sent by a SIP client;
querying a database according to an analysis result of the SIP service request message, so as to obtain template information of a corresponding user and message forwarding method information corresponding to a message method; and
obtaining forwarding address information of a target service server according to the template information of the user and the message forwarding method information, and sending the SIP service request message to a corresponding target service server according to the forwarding address information.

2. The method for achieving multi-service server distribution of SIP according to claim 1, wherein the analysis result comprises: sender and receiver information, message method information and message type information of the SIP service request message.

3. The method for achieving multi-service server distribution of SIP according to claim 2, wherein the step of querying a database according to an analysis result of the SIP service request message to obtain template information of a corresponding user and message forwarding method information corresponding to a message method comprises:
querying a database according to the sender information of the SIP service request message in the analysis result to judge whether the user opens an account, and if the user is not found in the database, then procedure ending; if the user is found in the database, then obtaining the template information of the user and the message forwarding method information corresponding to the message method from the database, wherein the database records account information of the user, the template information of the user, the message forwarding method information corresponding to the message method, address information of a service server, and address information of a soft exchange or a core network.

4. The method for achieving multi-service server distribution of SIP according to claim 3, before implementing the step of querying a database according to an analysis result of the SIP service request message to obtain template information of a corresponding user and message forwarding method information corresponding to a message method, further comprising:
receiving an authentication information request sent by the user; and
performing an authentication on information of the user, and executing a next step after the user is authenticated successfully; and if the authentication fails, the procedure ending.

5. The method for achieving multi-service server distribution of SIP according to claim 1, wherein related information in the database is stored in a memory, and the memory comprises:
a template information hash table, used for storing service type information corresponding to a template;
a service server hash table, used for storing forwarding address information of a service server; and
a SIP method distribution hash table, used for storing distribution rules of various SIP methods.

6. The method for achieving multi-service server distribution of SIP according to claim 5, wherein the memory further comprises:
a soft exchange distribution hash table, used for storing a corresponding distribution method and forwarding address information of a soft exchange;
and/or, a core network distribution hash table, used for storing a corresponding distribution method and forwarding address information of a core network.

7. An apparatus for achieving multi-service server distribution of session initiation protocol (SIP), comprising:
a transceiver module, configured to: obtain and analyze a SIP service request message sent by a SIP client and send an analysis result to a processing module; and send the SIP service request message to a corresponding target service server according to the obtained forwarding address information;
a processing module, configured to: query a database according to the analysis result of the SIP service request message, so as to obtain template information of a corresponding user and message forwarding method information corresponding to a message method; and obtain forwarding address information of the target service server according to the template information of the user and the message forwarding method information, and send the forwarding address information of the target service server to the transceiver module; and
a database, configured to: store the template information of the user and message forwarding method information corresponding to a template.

8. The apparatus for achieving multi-service server distribution of SIP according to claim 7, wherein the analysis result comprises: sender and receiver information, message method information and message type information of the SIP service request message.

9. The apparatus for achieving multi-service server distribution of SIP according to claim 8, wherein the processing module queries the database according to the sender information of the SIP service request message in the analysis result to judge whether the user opens an account, and if the user is found in the database, and then obtains the template information of the user and the message forwarding method information corresponding to the message method from the database, wherein the database records account information of the user, the template information of the user, the message forwarding method information corresponding to the message method, address information of a service server and address information of a soft exchange or a core network.

10. The apparatus for achieving multi-service server distribution of SIP according to claim 9, further comprising:
an authentication module, configured to: query information of the user when the processing module receives an authentication information request sent by the user, and perform authentication on authentication reply information replied by the user; and control the processing module to send the obtained forwarding address information of the target service server to the transceiver module only when the authentication module determines that a user authentication is passed.

11. The apparatus for achieving multi-service server distribution of SIP according to claim 9, wherein related information in the database is stored in a memory, wherein the memory stores:
a template information hash table, used for storing service type information corresponding to the template;
a service server hash table, used for storing forwarding address information of the service server; and
a SIP method distribution hash table, used for storing distribution rules of various SIP methods.

12. The apparatus for achieving multi-service server distribution of SIP according to claim 11, wherein the memory further stores:
a soft exchange distribution hash table, used for storing a corresponding distribution method and forwarding address information of a soft exchange;
and/or, a core network distribution hash table, used for storing a corresponding distribution method and forwarding address information of the core network.

13. A system for achieving multi-service server distribution of session initiation protocol (SIP), comprising a SIP client and a service server, and further comprising the apparatus for achieving multi-service server distribution of session initiation protocol as described in any one of claims 7-12.
